# EUROPEAN PATENT APPLICATION

(11) **EP 2 690 900 A1**
(43) Date of publication of application: **29.01.2014**
(21) Application number: 12290247.1
(22) Date of filing: 23.07.2012
(51) Int. Cl.: H04W 16/14

(54) **A macrocell base station, and a method of controlling radio transmissions from a small cell**

(71) Applicant: Alcatel Lucent, 75007 Paris (FR)
(72) Inventor: Ashraf, Imram, Swindon, Wiltshire SN5 5AA (GB); Samuel, Isaac, Swindon, Wiltshire SN5 5SH (GB)
(74) Representative: Sarup, David Alexander

(57) **Abstract**

A method is provided of controlling radio transmissions from a small cell. The method comprises: a user terminal in the small cell sending a report including an indication related to received signal to interference ratio for signals received from a macrocell base station to which the user terminal is connected, the user terminal not being connectable to the small cell base station which provides the small cell; the macrocell base station determining that the interference experienced by the user terminal exceeds a given threshold; the macrocell base station identifying the interfering small cell base station or being informed of the identity of the interfering small cell base station; the macrocell base station selecting at least one subframe in each time division multiple access frame to not be used by the small cell base station; and the macrocell base station informing the small cell base station by radio of said at least one subframe not to be used by the small cell base station. This is so as to allow the macrocell base station to communicate with the user terminal in said at least one subframe with acceptably low interference from the small cell.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term small cells generically for cells that are smaller than macrocells.

One way to establish for example, a femtocell, is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell. A typical coverage range is tens of metres.

Femtocell base stations have auto-configuring properties so as to support plug-and-play deployment by users, for example in which femtocell base stations may integrate themselves into an existing macrocell network so as to connect to the core network of the macrocell network.

Femtocell base stations are intended primarily for users belonging to a particular home or office. Femtocell base stations may be open access or closed access. In femtocell base stations that are closed access, access is restricted to only registered users, for example family members or particular groups of employees. In femtocell base stations that are open access, other users may also use the femtocell base station.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications. An alternative to such a wired broadband backhaul is to have a wireless backhaul.

Femtocell base stations arc intended primarily for users belonging to a particular home or office. Femtocell base stations may be open access or closed access. In femtocell base stations that are closed access, access is restricted only to registered users, for example family members or particular groups of employees. In femtocell base stations that are open access, other users may also use the femtocell base station, subject to certain restrictions to protect the Quality of Service received by registered users.

Femtocell base stations arc sometimes referred to as femtos.

In one example of a system involving closed access femtos, each femto has one or more closed subscriber groups (CSGs) of user terminals to which the femto may connect, the femto's association with a group being identified by a CSG identifier (CSG ID). A femto broadcasts its CSG ID and only user terminals authorised to connect with a femto of that CSG are allowed access. Each user terminal holds a list of CSGs to which that user terminal has subscribed.

Since closed access femtos do not allow access to unregistered users, co-channel deployment of femtos cause quality of service problems to users that are not registered with a femto in its vicinity so are connected to the macrocell base station. Co-channel deployment is, of course, where the femto uses the same radio frequency band as the macrocell base station. The quality of service problems can include poor radio coverage, poor voice call quality, lower data rates, more call drops and call inaccessibility.

### Summary

The reader is referred to the appended independent claims. Some preferred features are laid out in the dependent claims.

An example of the present invention is a method of controlling radio transmissions from a small cell. The method comprises: a user terminal in the small cell sending a report including an indication related to received signal to interference ratio for signals received from a macrocell base station to which the user terminal is connected, the user terminal not being connectable to the small cell base station which provides the small cell; the macrocell base station determining that the interference experienced by the user terminal exceeds a given threshold; the macrocell base station identifying the interfering small cell base station or being informed of the identity of the interfering small cell base station; the macrocell base station selecting at least one subframe in each time division multiple access frame to not be used by the small cell base station; and the macrocell base station informing the small cell base station by radio of said at least one subframe not to be used by the small cell base station. This is so as to allow the macrocell base station to communicate with the user terminal in said at least one subframe with acceptably low interference from the small cell.

Small cells may be femtocells. Some preferred embodiments provide interference management of closed access femtocell base stations, for example of Long Term Evolution (LTE) type, through radio transmissions from underlying macrocell base stations. This interference management may involve the use of Almost Blank Subframes. The interference management may be enhanced Intercell Interference Coordination (eICIC) using Almost Blank Subframes (ABS).

In some embodiments, the macrocell broadcasts information of which subframes are not to be used by a femtocell base station, and femtocells monitor the received broadcast transmissions, for example using Network Listening Mode. In some embodiments, the information of which of the subframes are not to be used by the femtocell base station is sent in a paging message. In some embodiments, when the on-going session terminates, or none of the macrocell-connected user terminals in a femtocell are being interfered-with to an unacceptable degree, then femtocell reverts to normal, non-ABS, operation.

Preferred embodiments provide the ability for a macrocell base station to manage interference from any femtocell within its coverage, and allow distributed control by macrocell base stations rather than control by the core network. In consequence, the amount of core network signalling, and macrocell base station processing load is reduced, and issues due to signalling via the backhaul are avoided.

Preferred embodiments allow a macrocell base station to control the interference from overlay cells within its coverage. Physical wired interfaces between macrocell base station and femtocell base stations, such as X2 interfaces are not required.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station and a macrocell-connected user terminal within one macrocell shown in Figure 1,
Figure 3 is a diagram illustrating a message sequence between the user terminal, macrocell base station and femtocell base station shown in Figure 2,
Figure 4 is a diagram illustrating enhanced Intercell Interference Coordination (eICIC) using Almost Blank Subframes (ABS), and
Figure 5 is a flow diagram illustrating operation of a network according to a second embodiment of the invention.

### Detailed Description

The inventors realised that interference management is a key issue in small cell deployments generally, including in the case of femtocell base stations operating in closed access mode but residing within the coverage area of a macrocell base station that uses the same frequency bands. In other words, the femtocells are co-channel femtocells with the macrocell.

The inventors realised that the known technique of time-domain enhanced InterCell Interference Coordination (eICIC) based on the use of Almost Blank Subframes (ABSs) has been developed in Third Generation Partnership Project (3GPP) standards Release 10. In this scheme, an interfering femtocell base station defines certain subframes within a radio frame as Almost Blank Subframes (ABSs), These ABSs have reduced downlink transmit power from the femto and/or reduced activity by the fcmto, compared to other subframes. A "victim" user terminal, namely one that is maerocell-connected but is not a subscriber of a nearby closed subscriber group femto, so cannot connect to the femto, experiences interference from the femto. In consequence, this user terminal is scheduled to receive and transmit within these ABSs, so experiencing acceptable interference at those times.

In this eICIC approach, the ABSs pattern of one macrocell base station (also known as an eNB, enhanced base station) is indicated to neighbour base stations over a wired interface, namely an X2 interface, to help in scheduling.

The inventors realised that use of a wired interface approach is unsuitable for use between macrocells and femtocells because X2 interfaces are not provided between macrocells and femtocells in the 3GPP release 10 standard. The inventors concluded that even if X2 interfaces were allowed in such a scenario, they would be unsuitable in practise due to there being many femtos within each macrocell. The large number of femtocells compared to the number of macrocells, in a typical deployment makes such an approach unfeasible. That many femtos would be connected to a macrocell base station, would likely cause problems, such as high macrocell base station processing load, high signalling load, and femto bandwidth issues.

We now describe a network including femtocell base stations then look in greater detail at managing interference to a user terminal that is in the vicinity of a femto but is not allowed to connect to the femto.

### Network

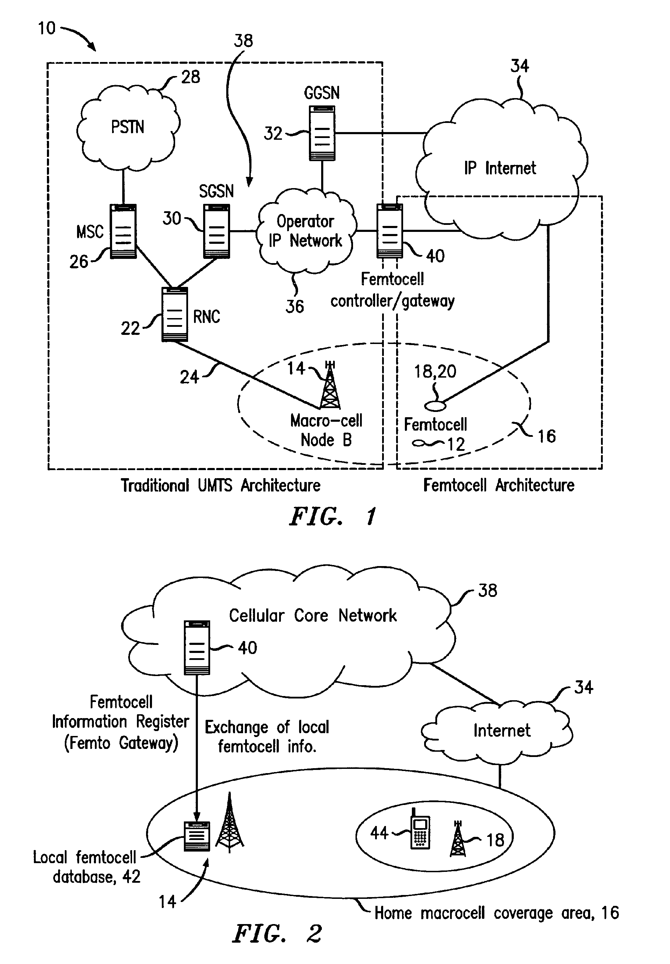

As shown in Figure 1, a network 10 for wireless communications, through which a user terminal 12 may roam, includes two types of base station, namely macrocell base stations and femtocell base stations (the latter being sometimes called "femtos"). One macrocell base station 14 is shown in Figure 1 for simplicity. Each macrocell base station has a radio coverage area that is often referred to as a macrocell 16. The geographic extent of the macrocell 16 depends on the capabilities of the macrocell base station 14 and the surrounding geography.

Within the macrocell 16, each femtocell base station 18 provides wireless communications within a corresponding femtocell 20. A femtocell is a radio coverage area. The radio coverage area of the femtocell 18 is much less than that of the macrocell 24. For example, the femtocell 20 corresponds in size to a user's office or home. There are multiple femtocell base stations 14 within each macrocell.

As shown in Figure 1, the network 10 is managed by a radio network controller, RNC, 22. The radio network controller, RNC, 22 controls the operation, for example by communicating with macrocell base stations 14 via a backhaul communications link 24. The radio network controller 22 maintains a neighbour list which includes information about the geographical relationship between cells supported by base stations. In addition, the radio network controller 22 maintains location information which provides information on the location of the user equipment within the wireless communications system 10. The radio network controller 22 is operable to route traffic via circuit-switched and packet-switched networks. For circuit-switched traffic, a mobile switching centre 26 is provided with which the radio network controller 22 may communicate. The mobile switching centre 26 communicates with a circuit-switched network such as a public switched telephone network (PSTN) 28. For packet-switched traffic, the radio network controller 22 communicates with serving general packet radio service support nodes (SGSNs) 30 and a gateway general packet radio support node (GGSN) 32. The GGSN then communicates with a packet-switch core 34 such as, for example, the Internet.

The MSC 26, SGSN 30, GGSN 32 and an operator IP network 36 constitute a so-called core network 38. The SGSN 30 and GGSN 32 are connected by the operator IP network 36 to a femtocell controller/gateway 40.

The femtocell controller/gateway 40 is connected via the Internet 34 to the femtocell base stations 18. These connections to the femtocell controller/gateway 40 are broadband Internet Protocol connections ("backhaul") connections.

It is possible for a mobile terminal 12 within the macrocell 24 to communicate with the macrocell base station 14 in known manner. However, when a mobile terminal enters into a femtocell 20 for which the mobile terminal is registered for communications within the femtocell base station 18, it is generally desirable to handover the connection with the mobile terminal from the macrocell to the femtocell. Some user terminals are, however, not registered for communications with the femtocell base station.

The macrocell base station and femtocells are time-synchronised in their operations, in this example from a Global Positioning System (GPS) signal. In an otherwise similar embodiment an IEEE 1588v2 timing signal is used instead.

As shown in Figure 2, the femtocell base station 18 is deployed within a macrocell 16 which may be considered as the home macrocell of the femto 18. The macrocell base station 14 of the macrocell 16 includes a local database 42 that contains information of all the femtocells that are located within that macrocell 16. Other elements are shown in Figure 2, including the core network 38, the internet 34 and the femtocell controller/gateway 40. A macrocell-connected user terminal 44 is also shown. That user terminal 44 is not registered to the femto (i.e not in the closed subscriber group of the fernto), and so is not connectable to the femto.

### Reducing Interference bv Coordination

Interference is reduced by coordination between the macrocell and femtocell using Almost Blank Subframes. This involves construction of the database 42 with information about femtocell base stations within the macrocell, identification of which femtocell(s) interfere with the macrocell's signals, and management of the interference.

These three main stages are described in turn below.

### Construction in a macrocell base station of database about local femtocell base stations

The database 42 of the macrocell 14 is updated via the femtocell controller /gateway (not shown in Figure 2) from a centralised femtocell information register 40, which is in the core network 38. The centralised information register contains information that is retrieved from each femtocell base station when first deployed and registered by the end user, who is femtocell base station owner. The information includes the location where the femtocell base station is deployed (for example, the user's address), identifiers of users that are registered as permitted to use the femto, Cell Global Identity(CGI), Physical Cell Identity (PCI) and transmit power.

Upon first deployment of the femto, the core network 38, stores the above-mentioned information in its centralised information register 40, and also uses the femto's location information to identify within which macrocell the femto is deployed. The core network 38 then sends the information about the femtocell base station to the local femto database 42 of the macrocell base station 16, where that information is stored. In this way, a macrocell base station keeps records of information for all the femtos deployed within the macrocell. This includes the macrocell base station having records of the Physical Cell Identities (PCIs) of the femtos.

### Identification of an interfering femtocell base station

In this example, there is no PCI reuse by femtos and hence each PCI can be considered a unique identifier of a femto.

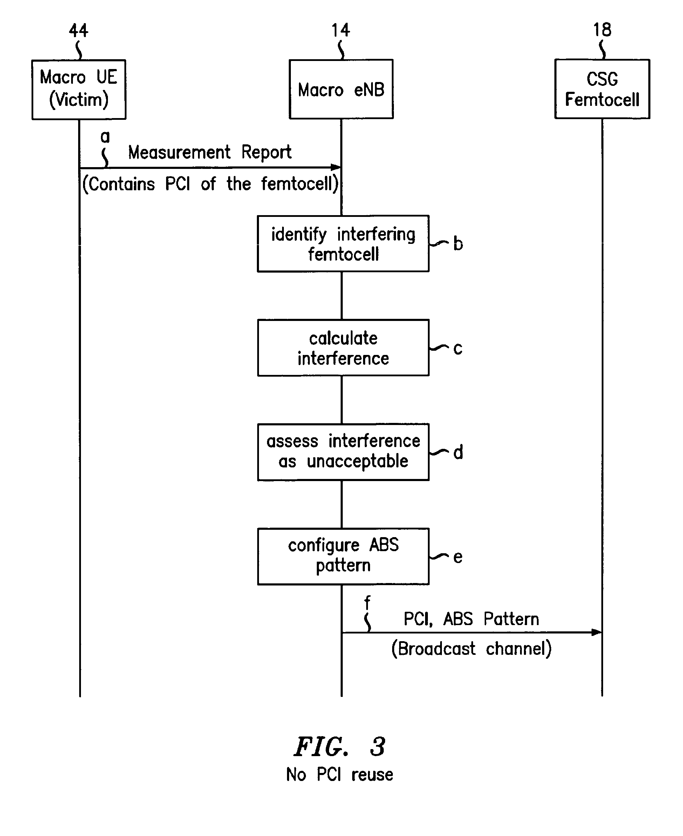

As shown in Figure 3, when the user terminal 44 that is connected to the macrocell base station 14 comes into the vicinity of the femto 18, the user terminal 44 detects the femto 18 and sends (step a) a measurement report to the macrocell base station 14. The measurement report indicates the signal quality from the femto 18 experienced by the user terminal 44 together with the PCI identifying the femto 18.

### Interference management

As also shown in Figure 3, the measurement report is used by the macrocell base station 14 to identify (step b) which is the interfering femto and calculate (step c) the interference being experienced by the user terminal 44. In this example the macrocell base station 14 determines (step d) whether the Signal-to-Interference/Noise-Ratio (SINR) becomes unacceptable with respect to a threshold, for at least a specific amount of time. If so assessed as being unacceptable, the macrocell base stations 14 evaluates what ABS pattern is to be used by the femto 18 and sends (step f) a broadcast message using the Broadcast Control Channel (BCCH). The broadcast message includes the ABS pattern information and the PCI which is the unique femto identifier.

In an otherwise similar embodiment, instead of a broadcast message being sent, a direct radio connection between the macrocell base station 14 and fcmto 18 is set up and used.

In order to receive the information from the macrocell base station by radio, the femto is assumed to have a Network Listening Mode (NLM) of operation, during which the femto is capable of receiving and decoding broadcast transmissions from the macrocell base station 18.

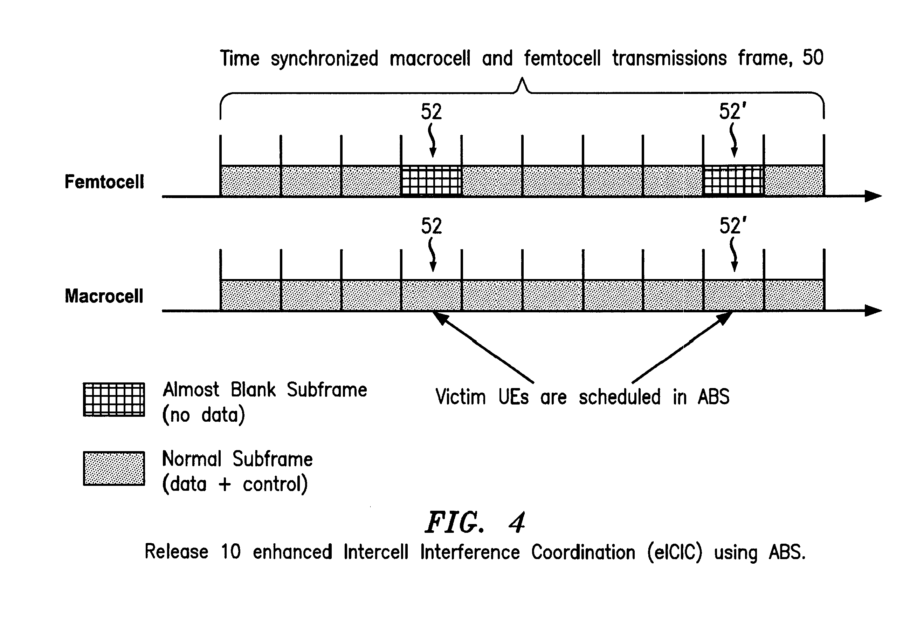

As shown in Figure 4, the ABS pattern that the femto is instructed to use includes, within each time frame 50, Almost Blank Subframes 52 which the femto 18 is not to use. The user terminal 44 then has its communications, both downlink from the macrocell base station 14 and uplink to the macrocell base station 14, scheduled to happen during those Subframes 52 when interference from the femto 18 is reduced.

Upon receiving the ABS pattern instruction, the femto 18 implements the pattern by reducing, or completely eliminating, transmissions on the selected subframes 52, 52'.

In an alternative but similar embodiment, the macrocell base station at times adjusts the ABS pattern to be used by the femto. The macrocell base station does this by sending an updated ABS pattern in a further instruction broadcast to the femto.

When it is determined either that the user terminal has left the radio coverage area of the femtocell base station or that the call or data session is finished, the macrocell base station 14 sends an over-the-air instruction to the femto 18 to cease its ABS mode so that the previous Almost Blank subframes 52, 52' again become available for use in radio communications by the femto 18.

### Some alternative examples

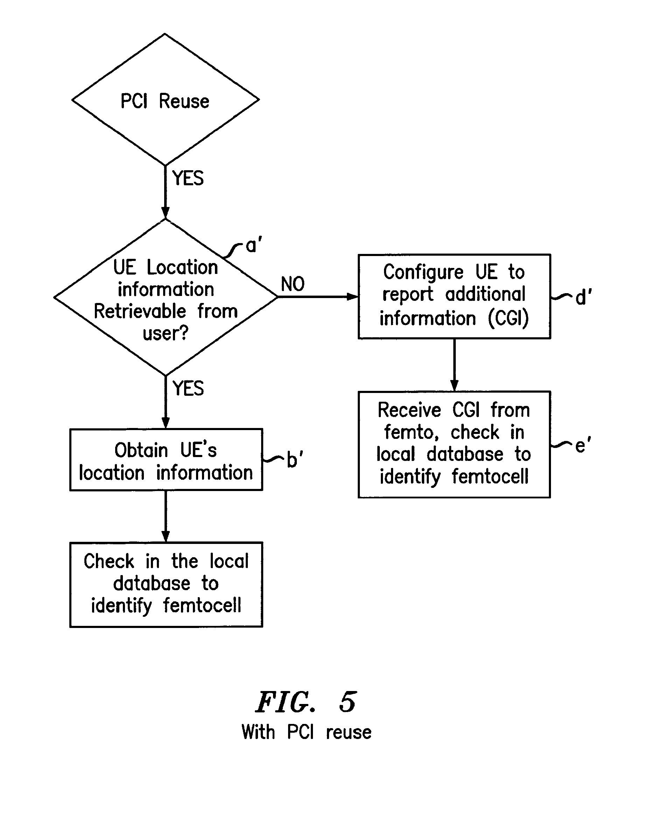

As shown in Figure 5, in an example in which there is Physical Cell Identity, PCI, reuse amongst femtos so that any particular PCI indicates a set of femtos, it is not possible for a macrocell to uniquely identify an interfering femto from its PCI alone. First, a query is made (step a') as to whether the location information, of the macrocell-connected user terminal that is being interfered, can be provided by the user terminal. The user terminal may determine its own location using Global Positioning System (GPS) or triangulation, for example. If yes, then this location information is sent (step b') by the user terminal to the macrocell base station, where that location information is used together with the PCI identifier to query (step c') the local database in the macrocell base station to identify the femto that is interfering.

If user terminal's location information is not retrievable, the macrocell base station instructs (step d') the user terminal to broadcast additional information to be used in uniquely identifying the femto, specifically, for example Cell Global Identity (CGI) and/or Closed Subscriber Group (CSG) Identifier (CSG ID). This additional information is used in inspecting (step e') the database in the macrocell base station to accurately identify the interfering femto.

The above described examples have involved femtocell base stations, but other examples involved other scenarios where overlay cells are used, for example co-channel metrocell deployments. The other examples may involve other types of small cells than femtocells, for example, microcells, picocells and/or metrocells.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media, Some embodiments involve computers programmed to perform said steps of the above-described methods.

## Claims

1. A method of controlling radio transmissions from a small cell comprising:
a user terminal in the small cell sending a report including an indication related to received signal to interference ratio for signals received from a macrocell base station to which the user terminal is connected, the user terminal not being connectable to the small cell base station which provides the small cell;
the macrocell base station receiving the report;
the macrocell base station determining from the indication that the interference experienced by the user terminal exceeds a given threshold;
the macrocell base station identifying the interfering small cell base station or being informed of the identity of the interfering small cell base station;
the macrocell base station selecting at least one subframe in each time division multiple access frame to not be used by the small cell base station; and
the macrocell base station informing the small cell base station by radio of said at least one subframe not to be used by the small cell base station so as to allow the macrocell base station to communicate with the user terminal in said at least one selected subframe with acceptably low interference from the small cell.

2. A method according to claim 1, in which the identifying the interfering small cell base station or being informed of the identity of the interfering small cell base station comprises identifying the interfering small cell base station;
said identifying the interfering small cell base station comprising inspecting a database of the locations and identifiers of small cell base stations within the macrocell.

3. A method according to claim 1 or claim 2, in which multiple small cell base stations reside within the macrocell, each small cell base station having a unique identifier, the unique identifier of the small cell in which the user terminal is situated is recorded by the user terminal to inform the macrocell base station of the identity of the interfering small cell base station.

4. A macrocell base station according to claim 3, in which the identifier is a Physical Cell Identifier, PCI.

5. A method according to claim 1 or claim 2, in which multiple small cell base stations reside within the macrocell, the method further comprising:
sending an identifier that is recorded by the user terminal to the macrocell base station, said identifier being a non-unique identifier of the interfering small cell base station;
identifying the interfering small cell base station or being informed of the identity of the interfering small cell base station by identifying the interfering small cell base station.

6. A method according to claim 5, in which said identifying the interfering base station comprising obtaining location information of the user terminal and using that location information together with the non-unique identifier to identify the interfering base station.

7. A method according to claim 5, in which said identifying the interfering base station comprising instructing the user terminal to send further identification data and using received further identification data together with the non-unique identifier to identify the interfering base station.

8. A method according to claim 7, in which the further identification data is Cell Global Identity, CGI, or Closed Subscriber Group Identity, CSG-ID.

9. A macrocell base station comprising:
means to receive from a user terminal in a small cell a report including an indication related to received signal to interference ratio for signals received from a macrocell base station to which the user terminal is connected, the user terminal not being connectable to the small cell base station which provides the small cell;
means to determine that the interference experienced by the user terminal exceeds a given threshold;
means to identify the interfering small cell base station or to be informed of the identity of the interfering small cell base station;
means to select at least one subframe in each time division multiple access frame to not be used by the small cell base station;
means to inform the small cell base station by radio of said at least one subframe not to be used by the small cell base station so as to allow the macrocell base station to communicate with the user terminal in said at least one subframe with acceptably low interference from the small cell.

10. A macrocell base station according to claim 9, in which the means to identify the interfering small cell base station or to be informed of the identity of the interfering small cell base station comprises means to identify the interfering small cell base station;
said means to identify the interfering small cell base station comprising a database of the locations and identifiers of small cell base stations within the macrocell.

11. A macrocell base station according to claim 9 or claim 10, configured to provide a macrocell within which multiple small cell base stations reside, each small cell base station having a unique identifier that is recorded by the user terminal to inform the macrocell base station of the identity of the interfering small cell base station.

12. A macrocell base station according to claim 11 in which the identifier is a Physical Cell Identifier, PCI.

13. A macrocell base station according to claim 9 or claim 10, configured to provide a macrocell within which multiple small cell base stations reside, an identifier that is recorded by the user terminal being sent to the macrocell base station, said identifier being a non-unique identifier of the interfering small cell base station;
the means to identify the interfering small cell base station or to be informed of the identity of the interfering small cell base station comprises means to identify the interfering small cell base station.

14. A macrocell base station according to claim 13, in which the means to identify the interfering base station comprising means to obtain location information of the user terminal and to use that location information together with the non-unique identifier to identify the interfering base station.

15. A macrocell base station according to claim 13, in which the means to identify the interfering base station comprising means to instruct the user terminal to send further identification data and means to use received further identification data together with the non-unique identifier to identify the interfering base station.
